**Europäisches Patentamt**

**European Patent Office**

**Office européen des brevets**

(19)

(11) Veröffentlichungsnummer: **0 261 303**
**B1**

(12) **EUROPÄISCHE PATENTSCHRIFT**

(45) Veröffentlichungstag der Patentschrift:
05.09.90

(51) Int. Cl.⁵: **F23C 11/02, F23L 15/00**

(21) Anmeldenummer: **87105781.6**

(22) Anmeldetag: **18.04.87**

(54) Druckaufgeladene Wirbelschichtfeuerung.

(30) Priorität: **23.08.86 DE 3628675**

(43) Veröffentlichungstag der Anmeldung:
**30.03.88 Patentblatt 88/13**

(45) Bekanntmachung des Hinweises auf die Patenterteilung:
**05.09.90 Patentblatt 90/36**

(84) Benannte Vertragsstaaten:
**AT BE CH DE ES FR GB GR IT LI NL SE**

(56) Entgegenhaltungen:
**EP-A- 0 164 692**
**DE-A- 3 604 572**
**GB-A- 2 023 268**
**GB-A- 2 111 846**

**Technische Mitteilungen, 77, 1984, Heft 617,**
**Seten 304-306**

(73) Patentinhaber: **Deutsche Babcock Werke**
**Aktiengesellschaft, Duisburger Strasse 375,**
**D-4200 Oberhausen 1(DE)**

(72) Erfinder: **Bülbring, Jürgen, Hagenstrasse 303 A,**
**D-5820 Gevelsberg(DE)**

(74) Vertreter: **Müller, Jürgen, Dipl.-Ing., Deutsche Babcock**
**AG Lizenz- und Patentabteilung Duisburger Strasse 375,**
**D-4200 Oberhausen 1(DE)**

## Beschreibung

Die Erfindung betrifft eine druckaufgeladene Wirbelschichtfeuerung mit den Merkmalen des Oberbegriffes des Anspruches 1.

Bei einer bekannten, wahlweise im atmosphärischen oder druckaufgeladenen Betrieb arbeitenden Wirbelschichtfeuerung (Technische Mitteilung 1984, Seiten 304–306) durchströmt die erwärmte Luft den Druckbehälter und tritt durch den Luftkasten in die Wirbelschicht ein. Dabei ist die Wandung des Druckbehälters der Wärmebelastung durch die erhitzte Luft ausgesetzt und muß festigkeitsmäßig auf diese Belastung ausgelegt sein. Während diese Belastung beim atmosphärischen Betrieb vergleichsweise gering ist, wäre die Wanddicke des Druckbehälters bei dem druckaufgeladenen Betrieb entsprechend groß zu wählen, wodurch sich das Gewicht des Druckbehälters beträchtlich erhöhte. Bei der bekannten Wirbelschichtfeuerung ist, um diese Schwierigkeiten zu umgehen, der Luftvorwärmer durch eine Bypass-Leitung umführt. Dabei wird die Luft nur bei einem atmosphärischen Betrieb in dem Luftvorwärmer erhitzt. Da in einem Luftvorwärmer üblicherweise Abwärme nutzbringend ausgenutzt wird, bedeutet die Umführung des Luftvorwärmers den Verzicht auf die Abwärmenutzung.

Bei einer anderen bekannten druckaufgeladenen Wirbelschichtfeuerung (VDI-Berichte Nr. 322, 1978, Seite 89) sind die Zündbrenner zum Starten der Wirbelschichtfeuerung nahe an dem Luftkasten und innerhalb des Druckbehälters angeordnet. Derartig angeordnete Zündbrenner sind schwer zugänglich und neigen zu Verstopfungen.

Weiterhin ist eine druckaufgeladene Wirbelschichtfeuerung bekannt (EP-A-O 164 692), bei der innerhalb des Druckbehälters ein Wärmetauscher zur Kühlung von abgeschiedenem Flugstaub angeordnet ist, dessen Abwärme zur Vorwärmung der Verbrennungsluft ausgenutzt wird. Zwar ist bei dieser Wirbelschichtfeuerung die Wandung des Druckbehälters nicht der Wärmebelastung durch vorerhitzte Luft ausgesetzt, jedoch beansprucht der innenliegende Wärmetauscher Platz und vergrößert damit das Bauvolumen des Druckbehälters.

Der Erfindung liegt die Aufgabe zugrunde, den von Rauchgas durchströmten, außerhalb des Druckbehälters liegenden Luftvorwärmer der gattungsgemäßen Wirbelschichtfeuerung so zu schalten, daß die Abwärme des Rauchgases zur Erwärmung der Verbrennungsluft ausgenutzt werden kann, ohne daß die Wandung des Druckbehälters einer erhöhten Wärmebelastung ausgesetzt ist.

Diese Aufgabe wird bei einer gattungsgemäßen Wirbelschichtfeuerung durch die kennzeichnenden Merkmale des Anspruches 1 gelöst. Durch die Anordnung des Luftvorwärmers innerhalb des Luftpfades hinter dem Druckbehälter wird erreicht, daß auf die Wandung des Druckbehälters zur Einstellung des Druckes nur Luft von vergleichsweise niedriger Temperatur wirkt. Die durch Abwärmenutzung erhitzte Luft wird so der Wirbelschichtfeuerung zugeführt, daß sie nicht mehr mit der Wandung des Druckbehälters in Berührung kommt. Die Wandung des Druckbehälters ist damit nur auf den Druck und die vergleichsweise niedrige Temperatur auszulegen.

Die von dem Luftvorwärmer zu dem Luftkasten der Wirbelschichtfeuerung führende Leitung gestattet gemäß den Ansprüchen 2 bis 4 in vorteilhafter Weise die Anordnung eines außenliegenden Zündbrenners und erleichtert die Vermischung der im Zündbrenner erzeugten Rauchgase mit der Verbrennungsluft.

Ein Ausführungsbeispiel der Erfindung ist in der Zeichnung dargestellt und wird im folgenden näher erläutert. Es zeigen:

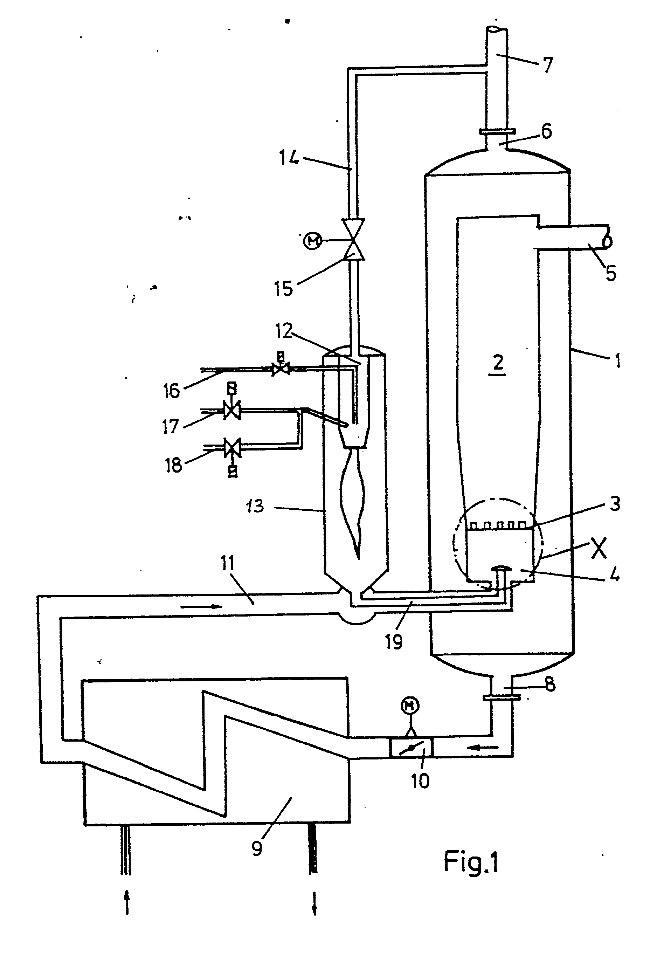

Fig. 1 schematisch in Seitenansicht eine Wirbelschichtfeuerung gemäß der Erfindung und

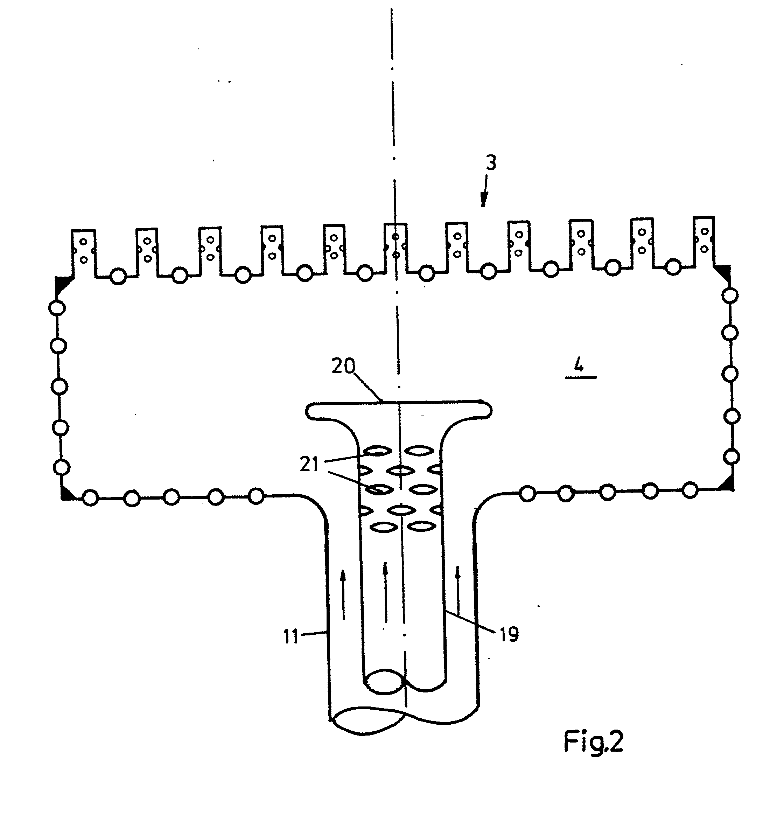

Fig. 2 die Einzelheit X nach Fig. 1.

Innerhalb eines Druckbehälters 1 ist die Brennkammer 2 einer druckaufgeladenen Wirbelschichtfeuerung angeordnet. Die Brennkammer 2 ist von druck- und gasdichten Rohrwänden begrenzt und weist in ihrem unteren Teil unterhalb eines Anströmbodens 3 einen Luftkasten 4 auf. In die Brennkammer 2 wird in an sich bekannter Weise, z. B. pneumatisch durch eine nicht dargestellte Leitung Brennstoff eingespeist, der durch Verbrennungsluft, die aus dem Luftkasten 4 durch den Anströmboden 3 in die Brennkammer 2 eindringt, verbrannt wird. Als Brennstoff wird Kohle verwendet, der zur Schwefeleinbindung Kalk beigemischt ist. An den oberen Teil der Brennkammer 2 ist eine Rauchgasleitung 5 angeschlossen, die den Druckbehälter 1 durchdringt. Das Rauchgas wird einem Abhitzekessel oder einer Gasturbine zugeführt.

Der Druckbehälter 1 ist mit einem Luftzuführungsstutzen 6 versehen, der mit einer Luftzuführungsleitung 7 verbunden ist. Die Luftzuführungsleitung 7 steht mit einem nicht dargestellten Kompressor in Verbindung, so daß Luft von erhöhtem Druck in den Druckbehälter 1 eindringt.

Der Druckbehälter 1 ist weiterhin mit einem Luftabführungsstutzen 8 versehen, der mit der Eintrittsseite eines Luftvorwärmers 9 verbunden ist. Vor dem Eintritt in den Luftvorwärmer 9 ist eine Drosselklappe 10 angeordnet. Der Luftvorwärmer 9 dient der Abwärmenutzung und ist von Rauchgas beheizt. Das luftseitige Austrittsende des Luftvorwärmers 9 ist mit einer Luftleitung 11 verbunden, die durch den Druckbehälter 1 geführt ist und in den Luftkasten 4 mündet.

Die von dem Kompressor kommende, unter erhöhtem Druck stehende und durch die Kompressionswärme vorgewärmte Luft durchströmt den Druckbehälter 1 und sorgt dadurch für einen Druckausgleich zwischen den Innenräumen des Druckbehälters 1 und der Brennkammer 2. Nach dem Austritt aus dem Druckbehälter 1 durch den Luftabführungsstutzen 8 wird die Luft in dem Luftvorwärmer 9 unter Ausnutzung von Abwärme erhitzt. Die erhitzte Luft wird nun so in die Brennkammer 2 eingeführt, daß sie nicht mit der Wandung des Druckbehälters 1 in Berührung kommt. Der Druckbehälter ist somit im wesentlichen nur druckbelastet.

Die von dem Luftvorwärmer 9 zu dem Luftkasten 4 führende Luftleitung 11 macht in vorteilhafter Weise die Anordnung eines zum Anfahren der Wirbelschichtfeuerung notwendigen Zündbrenners 12 außerhalb des Druckbehälters 1 möglich. Der Zündbrenner 12 ist von einem Druckmantel 13 umgeben und mit der Luftzuführungsleitung 7 über eine absperrbare Zweigleitung 14 verbunden, in der ein Ventil 15 angeordnet ist. Der Zündbrenner 12 ist weiterhin mit Zuführungsleitungen 16, 17, 18 für die Zuführung von Leichtöl oder Zündgas und Hilfsluft versehen. Der Druckmantel 13 ist auf der Austrittsseite mit einer Leitung 19 verbunden, die koaxial in der Luftleitung 11 verlegt ist. Diese koaxiale Leitung 19 mündet in den Luftkasten 4.

Das in den Luftkasten 4 hineinragende Ende der koaxialen Leitung 19 ist durch eine Platte 20 verschlossen, deren Durchmesser größer ist als der Durchmesser der koaxialen Leitung 19 und etwa dem Durchmesser der Luftleitung 11 entspricht. An dem austrittsseitigen Ende der koaxialen Leitung 19 sind Durchtrittsöffnungen 21 von ovalem, schlitzförmigen Querschnitt vorgesehen. Die Durchtrittsöffnungen 21 sind ringförmig um die koaxiale Leitung 19 angeordnet. Das durch den Zündbrenner 12 erzeugte heiße Rauchgas tritt durch die Durchtrittsöffnungen 21 aus und vermischt sich auf kurzem Weg und intensiv mit der durch den Ringraum zwischen der Luftleitung 11 und der koaxialen Leitung 19 zugeführten Luft. Der sich von dem Querschnitt der koaxialen Leitung 19 auf den Rand der Platte 20 erweiternde Endabschnitt der koaxialen Leitung 19 begünstigt die Strömung von Rauchgas und Luft. Während des Anfahrens läßt sich über die Drosselklappe 10 nach dem Öffnen des Ventils 15 das Luftmengenverhältnis der durch den Luftvorwärmer 9 strömenden Luft und der den Zündbrenner 12 durchströmenden Luft regeln. Auf diese Weise kann eine gezielte Temperaturänderung beim Anfahren erreicht werden.

## Patentansprüche

1. Druckaufgeladene Wirbelschichtfeuerung mit einem Druckbehälter (1), der mit einem Luftzuführungsstutzen (6) versehen und in dem eine Brennkammer (2) angeordnet ist, die mit einem Luftkasten (4) zur Zuführung von in einem Luftvorwärmer vorgewärmter Verbrennungsluft versehen ist, wobei in der zu dem Druckbehälter (1) führenden Luftleitung ein Verdichter angeordnet ist, dadurch gekennzeichnet, daß der Druckbehälter (1) einen Luftabführungsstutzen (8) aufweist und daß der Luftvorwärmer (9) eintrittsseitig mit dem Luftabführungsstutzen (8) und austrittsseitig über eine durch den Druckbehälter (1) geführte Luftleitung (11) mit dem Luftkasten (4) der Brennkammer (2) verbunden ist.

2. Wirbelschichtfeuerung nach Anspruch 1, dadurch gekennzeichnet, daß außerhalb des die Brennkammer (2) umschließenden Druckbehälters (1) ein von einem Druckmantel (13) umgebener Zündbrenner (12) angeordnet ist, dessen Austritt mit einer innerhalb der Luftleitung (11) verlegten koaxialen Leitung (19) verbunden ist, die in den Luftkasten (4) mündet.

3. Wirbelschichtfeuerung nach Anspruch 2, dadurch gekennzeichnet, daß an dem Austrittsende der koaxialen Leitung (19) Durchtrittsöffnungen (21) ringförmig angeordnet sind.

4. Wirbelschichtfeuerung nach Anspruch 3, dadurch gekennzeichnet, daß die Durchtrittsöffnungen (21) einen ovalen, schlitzförmigen Querschnitt aufweisen.

## Claims

1. Pressure-charged fluidised bed furnace with a pressure container (1), which is provided with an air feed nipple (6) and in which a combustion chamber (2) is arranged, which is provided with an air box (4) for the feeding of combustion air that has been preheated in an air preheater, wherein a compressor is arranged in the air duct preheater, wherein a compressor is arranged in the air duct leading to the pressure container (1), characterised thereby, that the pressure container (1) displays an air outlet nipple (8) and that the air preheater (9) is connected at the entry with the air outlet nipple (8) and at the exit by way of an air duct (11) led through the pressure container (1) with the air box (4) of the combustion chamber (2).

2. Fluidised bed furnace according to claim 1, characterised thereby, that a pilot burner (12), which is surrounded by a pressure shell (13) and the exit of which is connected with a co-axial duct (19), which is disposed within the air duct (11) and opens into the air box (4), is arranged outside the pressure container (1) enclosing the combustion chamber (2).

3. Fluidised bed furnace according to claim 2, characterised thereby, that passage openings (21) are arranged annularly at the exit end of the co-axial duct (19).

4. Fluidised bed furnace according to claim 3, characterised thereby, that the passage openings (21) display an oval, slot-shaped cross-section.

## Revendications

1. Foyer à lit fluidisé pressurisé, comportant un réservoir sous pression (1), pourvu d'une tubulure d'amenée d'air (6) et dans lequel est disposé une chambre de combustion (2) pourvue d'un caisson d'air (4) servant à amener de l'air de combustion préchauffé dans un préchauffeur d'air, un compresseur étant disposé dans une conduite d'air menant au réservoir sous pression (1), caractérisé en ce que le réservoir sous pression (1) présente une tubulure d'évacuation d'air (8) et que le préchauffeur d'air (9) est relié côté entrée à la tubulure d'évacuation d'air (8) et côté sortie au caisson d'air (4) de la chambre de combustion (2), par l'intermédiaire d'une conduite d'air (11) menée à travers le réservoir sous pression (1).

2. Foyer à lit fluidisé selon la revendication 1, caractérisé en ce qu'à l'extérieur du réservoir sous pression (1) entourant la chambre de combustion (2) est disposé un brûleur d'allumage (12), entouré d'une enveloppe à pression (13), qui dont la sortie est reliée à une conduite coaxiale (19), placée à l'intérieur de la conduite d'air (11), qui débouche dans le caisson d'air (4).

3. Foyer à lit fluidisé selon la revendication 1, caractérisé en ce que des ouvertures de passage (21) sont disposées sous forme d'anneaux, sur l'extrémité de sortie de la conduite coaxiale (19).

4. Foyer à lit fluidisé selon la revendication 1, caractérisé en ce que les ouvertures de passage (21) présentent une section transversale ovale, en forme de fentes.

Fig.1

Fig.2